# EUROPEAN PATENT SPECIFICATION

(11) **EP 1 622 349 B1**
(45) Date of publication and mention of the grant of the patent: **12.03.2014**
(21) Application number: 05254353.5
(22) Date of filing: 12.07.2005
(51) Int. Cl.: H04M 3/56

(54) **Teleconference volume level monitoring and feedback on the volume level**
Lautstärke-Überwachung und Rückmeldung bezüglich der Lautstärke in einer Telekonferenz
Contrôle et notification du volume dans une téléconférence

(30) Priority: 27.07.2004 US 899588
(43) Date of publication of application: 01.02.2006
(73) Proprietor: HEWLETT-PACKARD DEVELOPMENT COMPANY, L.P., Houston, TX 77070 (US)
(72) Inventor: Vaszary, Mark K., Roseville CA 95678 (US); Tripp, Travis S., Fort Collins CO 80525 (US)
(74) Representative: Jacoby, Georg

(56) References cited:
- EP-A- 0 659 006
- WO-A-2004/095823
- US-A- 4 658 425
- US-A1- 2002 150 220
- US-B1- 6 643 373
- US-B1- 6 888 935

## Description

### BACKGROUND OF THE INVENTION

Wireless communication systems, which include cellular communication systems, have long been in existence. In a typical wireless communication system, a mobile handset employs the wireless network infrastructure to communicate voice and/or data with other telecommunication devices, such as another mobile handset, a land-based telephone, a computer, and the like. The wireless portion typically covers only the last hop between the wireless network infrastructure and the handset.

Teleconferencing typically involves multiple participants from geographically dispersed locations. With a teleconference, multiple participants may verbally communicate with one another via teleconference stations and an appropriate telecommunication network.

To elaborate, a typical teleconference system may include a centralized teleconference module and a plurality of teleconference stations. A teleconference station may represent, for example, a wired, cordless, or cellular communication device that is capable of audio communication. These communication devices may be analog or digital in nature, and may communicate using a circuit-oriented (such as the Plain Old Telephone System or POTs) and/or a packet-based telecommunication network (such as the Internet). Each teleconference station allows a teleconference participant to access the centralized teleconference module, which has the logic for tying the teleconference stations together, thereby enabling the teleconference to proceed. In a common scenario, each teleconference participant is asked to dial a particular telephone number using his teleconference station in order to participate in the teleconference.

One of the commonly encountered problems when teleconferencing relates to the audio quality from the different participants. Particularly, an unduly soft or unduly loud audio volume level from a participant may make it very difficult or impossible for that participant to be understood by others. Further, an unduly high level of background noise may render a participant unintelligible to other participants.

The audio quality associated with a particular teleconference station or participant may be influenced by many factors. For example, when different teleconference stations are employed, the audio volume produced sometimes differs from teleconference station to teleconference station. Thus, even though two participants may speak at the same volume level into their respective teleconference stations, participants listening in may perceive different audio volume levels.

Even if the participants use similar teleconference stations, a participant may not be understood if he speaks too softly or too loudly or if the background noise level at his location is excessive. Further, differences in the quality of the network trunks may result in different audio volume levels and/or may affect differently the clarity associated with the audio signal received from each teleconference station. Additionally, if the teleconference station is a battery-powered unit, such as a cellular telephone, a low battery state may cause the participant's voice to be inadequately amplified, rendering it difficult for others to understand the words spoken.

Ironically, while the listening participants may readily perceive that the audio quality associated with a particular participant is poor, that particular participant may be completely oblivious to the poor audio quality perceived by others. This is because while a speaker (i.e., a teleconference participant currently speaking) can easily hear his own voice, other participants listening in can only hear the electrically or digitally reproduced sound representing the speaker's voice. If the process of capturing, transmitting, processing, and/or reproducing the speaker's voice degrades the audio quality, such quality degradation (in clarity and/or volume) is usually not perceived by the speaker himself.

This problem affects productivity in different ways. For example, when the audio quality associated with a particular participant is poor, others may have difficulties understanding him. This may lead to misunderstanding, and may sometimes require other participants to continually ask that the speaker speak louder or repeat himself. If the audio volume level associated with a particular participant/teleconference station is unduly high, the loud audio level may cause discomfort to other participants. On the other hand, if the audio volume level associated with a particular participant/teleconference station is unduly low, another participant may mistakenly believe that no one is currently speaking and may start speaking himself This may be perceived as rudeness by the original speaker Furthermore, with both participants speaking, the resultant audio may be unintelligible to all others.

US patent 6643373 describes a handset containing a microphone, which detects the level of the user's speech. An electronic circuit conditions the microphone output, and activates one of three indicator lights, indicating "go", "slightly too loud" and "stop", depending upon the level of the microphone output.

In European Patent 0659006, the audio streams of a teleconference are each multiplied by their own weighting parameter, before summing the audio streams together for output. Thus the relative volume of each of the audio output streams can be controller For each block of audio data, the volume is calculated and displayed to the user, allowing the user to see the volume in each audio input strearn independently. The weighting parameter is adjusted by the user, depending on how loud each incoming stream is

US Patent application 2002/150220 describes an audio controller which can process the audio signals of conferenced telephone lines and intelligently adjust the audio characteristics of the audio signals.

US Patent 4,658,425 describes a system which activates or disables microphone input based on the noise levels generated by the various microphones.

### SUMMARY OF INVENTION

The invention relates, in an embodiment, to a method for correcting voice levels of participants in a teleconference that involves a plurality of teleconference stations The method includes receiving a first audio input from one of the teleconference stations. The method further includes electronically ascertaining whether a volume of the first audio input is acceptable. If the volume of the first audio input is unacceptable, the method includes indicating to one of the participants via the one of the teleconference stations that the volume of the first audio input is unacceptable. Such indicating is performed in a manner that is substantially transparent to at least another of the participants. Finally, if the volume of the first audio input is unacceptable, the system performs signal processing on the audio signal in order to correct the volume level.

### BRIEF DESCRIPTION OF THE DRAWINGS

The present invention is illustrated by way of example, and not by way of limitation, in the figures of the accompanying drawings and in which like reference numerals refer to similar elements and in which:
Fig. 1 shows, in accordance with an embodiment of the present invention, a simplified teleconference system, which includes a centralized teleconference module having an Audio Quality Monitoring System (AQMS) and a plurality of teleconference stations.
Fig. 2 illustrates, in accordance with an embodiment of the present invention, the steps for monitoring and/or correcting audio quality in a teleconference.
Fig. 3 illustrates, in accordance with an embodiment of the present invention, the corrective actions that may be performed.

### DETAILED DESCRIPTION OF EMBODIMENTS

The present invention will now be described in detail with reference to a few embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

In accordance with embodiments of the invention, there is provided an audio quality monitoring system (AQMS) for monitoring the audio quality (in terms of volume and/or clarity) associated with teleconference stations and for alerting the participant associated with a teleconference station if the audio quality associated with that teleconference station is outside of an acceptable quality range. In an embodiment, the alert is delivered to the participant in a manner that is substantially transparent to all other participants. With the alert, the participant may then make the appropriate adjustment to bring the audio quality level associated with his teleconference station within the acceptable quality range. If the audio quality cannot be brought within the acceptable quality range, the teleconference system may exclude that participant from the teleconference, or may allow that participant to participate only as an observer (i.e., the participant can listen in but cannot speak to others).

In an embodiment, the AQMS receives an audio input of the speaker's voice from each teleconference station that enters the teleconference. For example, each participant may be asked to pronounce his name or to speak some words into his teleconference station upon entering the teleconference. Alternatively or additionally, an audio input sample of the speaker's voice may be taken periodically throughout the teleconference. Alternatively or additionally, an audio input sample may be taken while the participant is not speaking (at the start of the teleconference and/or periodically throughout the teleconference) in order to ascertain the quality of the network and/or the level of the background noise.

The AQMS then ascertains whether the audio quality associated with the audio input is acceptable. For example, the AQMS may ascertain whether the volume level associated with the audio input is higher than a predefined minimum threshold or is lower than a predefined maximum threshold. If the volume level is not in between the predefmed minimum threshold and the predefined maximum threshold, the AQMS may generate an alert signal to the teleconference station to indicate to the participant that the audio quality is unacceptable. As another example, the AQMS may ascertain that the background noise is excessive and may generate an alert signal to the teleconference station to inform the participant of the unacceptable background noise level.

The alert signal may be specific to the audio quality problem ascertained. For example, if the audio volume level is too low, the alert signal may be an indication that the audio level is too low to enable the participant to take an appropriate corrective action to increase the audio level. If the audio volume level is too high, a different alert signal may be sent to the teleconference station to allow the participant to take a different corrective action to reduce the audio level.

If the background noise is excessive, a different alert signal may be sent to the teleconference station to allow the participant to take another different corrective action to reduce the background noise. Generally speaking, these corrective actions may include, for example, moving the teleconference station closer or further away from the participant, speaking softer or louder, adjusting the volume control on the teleconference station, recharging the battery of a battery-powered teleconference station, and/or moving the teleconference station to a different location.

In an embodiment, the alert signal pertaining to audio quality problem is sent by the AQMS and received by a particular teleconference station in a manner that is substantially transparent to all other participants. For example, the alert signal may cause an appropriate visual indicator, such as a light or textual information, to be shown at the teleconference station. As another example, the AQMS may temporarily mute the teleconference station (e.g., by sending a signal to the teleconference station to inhibit the transmission of sound from that teleconference station) while providing an audio alert signal to that particular teleconference station to inform the participant associated with that particular teleconference station of the audio quality problem.

If the audio quality cannot be brought into compliance, the AQMS may exclude that teleconference station from the teleconference. In this case, the participant may need to employ a different teleconference station in order to access the teleconference, for example, the AQMS may alternatively allow the teleconference station to access the teleconference for receiving purpose only. In other words, the teleconference station can receive the teleconference audio but cannot transmit sounds generated by the participant associated with that teleconference station. For example, the microphone may be turned off to inhibit the transmission of sounds. In this case, the participant utilizing that teleconference station is essentially designated an observer only since he can listen in but cannot speak to the other teleconference participants.

In addition to sending an alert signal to the teleconference station, the AQMS will take the corrective action itself. For example, the AQMS may correct the audio quality problem itself, using its own circuitry or the circuitry associated with the centralized teleconference module. The correction may include, for example, adjusting the amplification level and/or filtering the audio signal received from the teleconference station to correct the volume level and/or to reduce the background noise. As another example, the correction may involve performing digital signal processing on the audio signal received (after digitization) in order to correct the volume level and/or reduce the background noise. In an embodiment, the AQMS may measure the background noise level and may only consider sounds having a volume level exceeding the background noise level as the speaker's. The speaker's sound input may thus be filtered from the background noise level (e.g., via a digital or analog filtering technique) and processed as appropriate to improve intelligibility.

In an embodiment, audio samples are taken only once when the participants enter the teleconference. Audio samples may, in another embodiment, alternatively or additionally, be periodically taken during the teleconference. These audio samples are analyzed for their audio quality. If the audio quality of an audio sample is found to be deficient, the participant may be notified in the manner discussed earlier and/or corrective action may be undertaken.

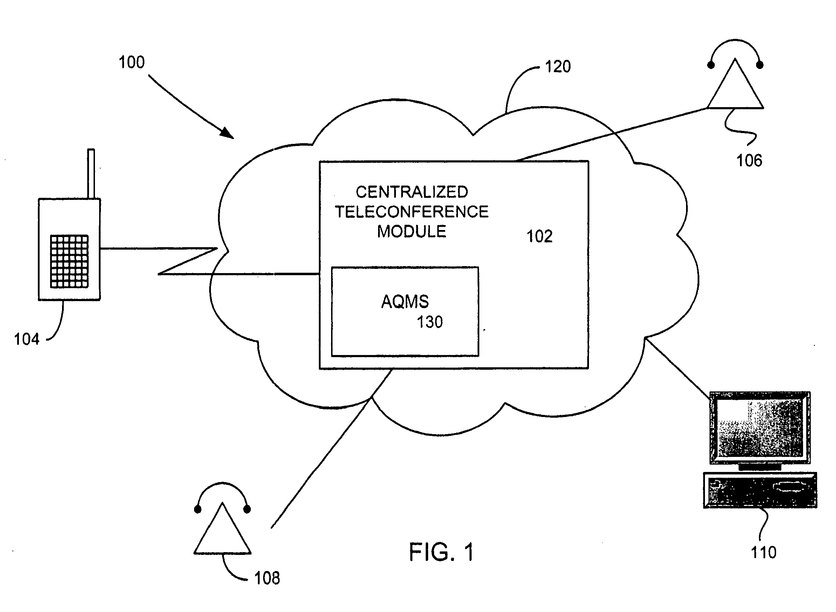

The features and advantages of the invention may be better understood with reference to the figures and discussions that follow. Fig. 1 shows, in accordance with an embodiment of the present invention, a simplified teleconference system 100, which includes a centralized teleconference module 102 having an Audio Quality Monitoring System (AQMS) 130 and a plurality of teleconference stations 104, 106, 108, and 110. Teleconference station 104 represents a cellular or cordless phone (which may be analog or digital). Teleconference station 106 and teleconference station 108 represent wired telephones (which may also be either analog or digital), and teleconference station 110 represents a computer that is capable of audio communication. Other communication devices capable of audio communication may also be employed as teleconference stations. Any number of teleconference stations may be accommodated by an appropriately configured centralized teleconference module 102. These teleconference stations are connected to one another and to centralized teleconference module 102 via a telecommunication network, which is shown conceptually in Fig. 1 using reference number 120.

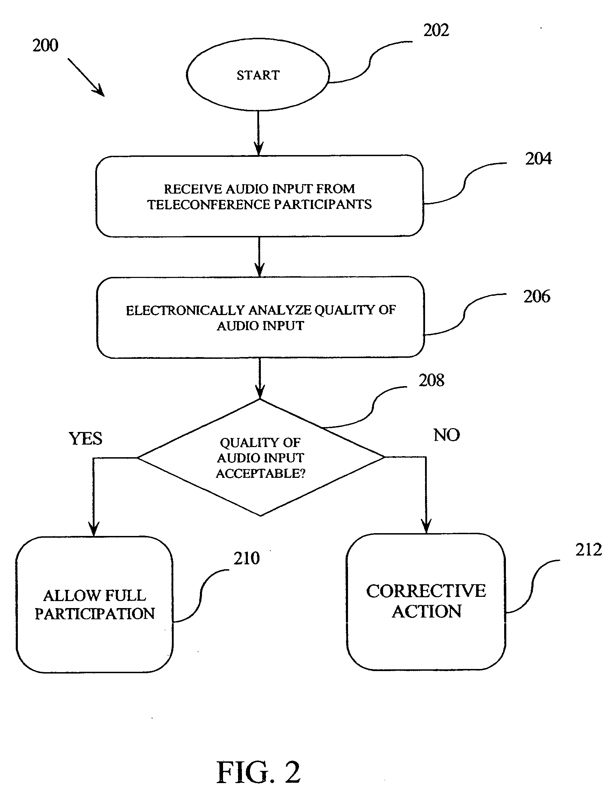

Fig. 2 illustrates, in accordance with an embodiment of the present invention, the steps for monitoring and/or correcting audio quality in a teleconference. The method 200 starts at step 202 and begins by receiving an audio input from the teleconference station (step 204). The audio input may represent, for example, voice input from the participant, which is received by the AQMS via a communication channel set up with the teleconference station. The audio input may also represent, for example, a sample that is taken while the participant is not speaking to measure the background noise. The audio input may be received by the AQMS when the participant first enters the teleconference and/or periodically throughout the teleconference.

In step 206, the audio input quality is electronically analyzed. This analysis may involve either analog or digital analysis and may include an analysis for the audio volume and/or clarity (which measures the background noise). As mentioned, the AQMS may ascertain whether the volume level associated with the audio input is higher than a predefined minimum threshold or is lower than a predefined maximum threshold. As another example, the AQMS may ascertain whether the background noise exceeds a predefined maximum permissible background noise level. This may be accomplished by, for example, comparing the amplitude of the background noise signal with the amplitude of a predefined maximum permissible background level

If the audio input quality is acceptable (ascertained by step 208), the participant is permitted to participate in step 210 as a full participant (i.e., the participant can both transmit and receive). On the other hand, if the audio input quality is unacceptable, corrective action is required (step 212).

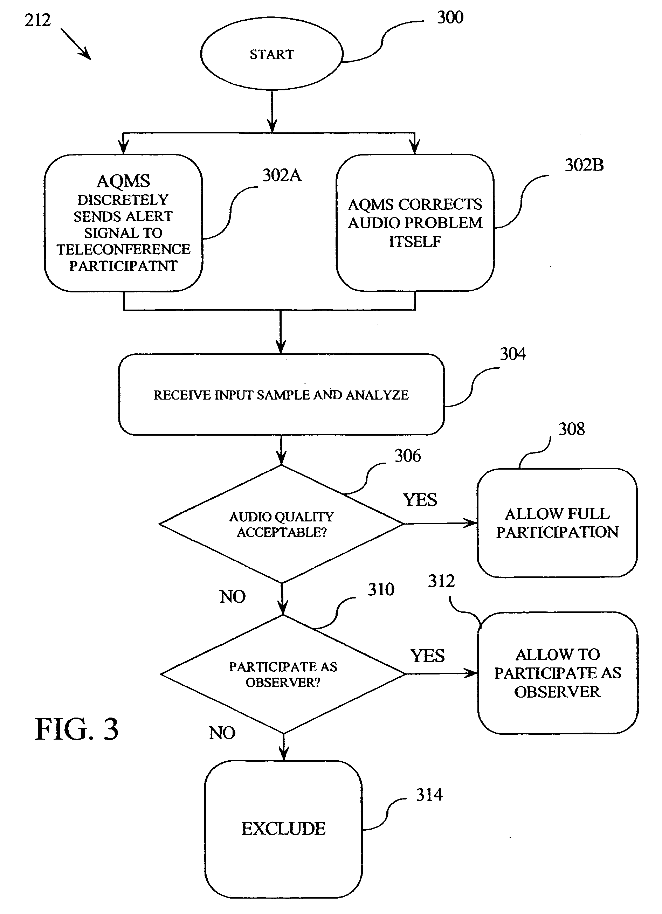

Fig. 3 illustrates, in accordance with an embodiment of the present invention, the corrective action that may be performed (as required by step 210). From start step 300, the next step 302A involves sending an alert signal from the AQMS to the teleconference station which has an audio quality issue. As mentioned, this signal may be sent by the AQMS and received by a teleconference station in a manner that is substantially transparent to other teleconference stations of the teleconference system and/or other participants. For example, the signal may be discreetly sent to the one teleconference station and/or the one participant that has the audio quality issue instead of to all teleconference stations and/or to all participants. The alert signal may be visual (e.g., a blinking light) and/or audio (e.g., an audible tone) in nature. The alert signal informs the participant associated with the teleconference station to allow the participant to take an appropriate corrective action.

The AQMS may itself undertake the task of correcting the audio signal in order to achieve the requisite audio quality (step 302B). As mentioned, the AQMS may process the received audio signal from a teleconference station using either an analog or a digital technique (or a combination thereof) to achieve an acceptable volume level and/or to lower the background noise. Techniques for processing an audio signal to improve intelligibility are known in the art. In yet another embodiment, both steps 302A and 302B may be performed by the AQMS.

In step 304, another input sample is then received by the AQMS and analyzed for quality (volume and/or clarity). If the audio quality is acceptable (as ascertained in step 306), full participation is allowed for that teleconference station and its associated participant in step 308. In one embodiment, the AQMS may allow the participant a number of tries and may receive and analyze multiple input samples in an attempt to grant the teleconference station full participation in the teleconference.

If the corrective actions of step 302A and/or 302B fail to yield an acceptable audio quality from this teleconference station, the method may ascertain next (step 310) whether this teleconference station may be allowed to participate as an observer unit (i.e., may receive but not transmit). If such is the case, the participant is granted observer status (step 312). On the other hand, if the observer status is not permitted, the teleconference station is excluded from the teleconference. In this case, the participant would need to access another teleconference station in order to attempt to participate in the teleconference.

In an embodiment, the conference chair (i.e., the person or entity administratively responsible for the teleconference) and/or one or more other participants may be provided with selectable or settable options to customize the audio quality control. For example, the AQMS may allow the conference chair to modify the acceptable minimum and/or maximum sound level threshold, either for the entire system or for a particular teleconference station. For example, the AQMS may allow the conference chair to modify the acceptable background noise threshold, either for the entire system or for a particular teleconference station.

As yet another example, the AQMS may allow the conference chair to modify the number of tries a particular participant may attempt before judging that further correction actions are futile for a particular teleconference station. As still another example, the AQMS may allow the conference chair to override any quality control for a particular teleconference station to allow a particular participant to participate, either as an observer or as a full participant, irrespective of the audio quality received. For example, the conference chair may be provided with a control panel, which may be software implemented on a computer that interfaces with the AQMS, to allow the conference chair to set preferences for individual users and/or teleconference stations. Using the control panel, the conference chair may for example specify that the quality control for a particular user and/or teleconference station be suspended. This latter option is highly advantageous since the participants may, for a variety of reasons, be willing to tolerate a lower audio quality level associated with one or more teleconference stations in order to hold the teleconference. For example, participants in a teleconference may be willing to tolerate a lower quality level because of time pressure, or because of the importance of the subject matter discussed, or because of the criticality of a participant.

As can be appreciated from the foregoing, embodiments of the invention allow a teleconference participant to be aware of audio quality problems associated with his teleconference station so that the participant can take an appropriate corrective action. In one case, the AQMS may, alternatively or additionally, undertake the corrective action itself in order to improve audio quality. The monitoring and accompanying corrective action may take place at the beginning of the teleconference or at any time during the teleconference. With the invention, the problems associated with poor teleconference audio (such as misunderstanding, requiring speakers to repeat themselves, and/or inadvertently speaking while others are speaking) are advantageously avoided. By providing options to adjust the acceptable thresholds for volume and/or background noise, as well as a manual override option to enable a participant to participate irrespective of quality issues, a high degree of flexibility is achieved.

While this invention has been described in terms of several embodiments, there are alterations, permutations, and equivalents which fall within the scope of this invention. It should also be noted that there are many alternative ways of implementing the methods and apparatuses of the present invention. It is therefore intended that the following appended claims be interpreted as including all such alterations, permutations, and equivalents as fall within the scope of the present invention as defined by the claims.

## Claims

1. A method (200) for correcting voice levels of participants in a teleconference that involves a plurality of teleconference stations (104, 106, 108, 110), comprising:
receiving (204), in an audio quality monitoring system, a first audio input from one of said teleconference stations,
electronically ascertaining (206), by the system, whether a volume of said first audio input is acceptable;
if said volume of said first audio input is unacceptable (208), said system indicating to one of said participants via said one of said teleconference stations that said volume of said first audio input is unacceptable, said indicating being performed in a manner that is substantially transparent (302A) to at least another of said participants; and
if said volume of said first audio input is unacceptable, said system performing signal processing on the audio signal in order to correct the volume level.

2. The method of claim 1 wherein said first audio input represents a voice inputs said one of said participants.

3. The method of claim 2 wherein said volume of said first audio input is deemed unacceptable if said volume of said first audio input falls below a predefined minimum threshold.

4. The method of claim 2 wherein said volume of said first audio input is deemed unacceptable if said volume of said first audio input is above a predefined maximum threshold.

5. The method of claim 2 further comprising excluding (314) said one of said participants from said teleconference if audio inputs from said one of said teleconference stations remain unacceptable.

6. The method of claim 5 wherein said first audio input represents a sample automatically taken during said teleconference.

7. The method of claim 1 wherein said first audio input represents a sample automatically taken (314) during said teleconference.

8. The method of claim 1 further comprising granting said one of said participants from said teleconference an observer status (312) if inputs from said one of said teleconference stations remain unacceptable.

9. The method of claim 1 wherein said first audio input represents a background noise level.

10. The method of claim 1 wherein said first audio input represents a voice sample by said one of said participants upon entering said teleconference.

11. The method of claim 1, further comprising reducing the background noise of the audio signal.

## Patentansprüche

1. Verfahren (200) zum Korrigieren von Lautstärkepegeln von Teilnehmern an einer Telekonferenz, die eine Vielzahl von Telekonferenzstationen (104, 106, 108, 110) beinhaltet, wobei das Verfahren umfasst:
Empfangen (204) einer ersten Audioeingabe von einer der Telekonferenzstationen in einem Audioqualitätsüberwachungssystem;
elektronisches Feststellen (206) durch das System, ob die Lautstärke der ersten Audioeingabe akzeptabel ist;
wenn die Lautstärke der ersten Audioeingabe inakzeptabel ist (208), zeigt das System einem der Teilnehmer über die eine der Telekonferenzstationen an, dass die Lautstärke der ersten Audioeingabe inakzeptabel ist, wobei das Anzeigen derart durchgeführt wird, dass es für mindestens einen weiteren der Teilnehmer im Wesentlichen transparent (302A) ist; und
wenn die Lautstärke der ersten Audioeingabe inakzeptabel ist, führt das System eine Signalbearbeitung des Audiosignals durch, um den Lautstärkepegel zu korrigieren.

2. Das Verfahren nach Anspruch 1, wobei die erste Audioeingabe eine Spracheingabe des einen der Teilnehmer darstellt.

3. Das Verfahren nach Anspruch 2, wobei die Lautstärke der ersten Audioeingabe als inakzeptabel betrachtet wird, wenn die Lautstärke der ersten Audioeingabe einen vordefinierten Mindestschwellenwert unterschreitet.

4. Das Verfahren nach Anspruch 2, wobei die Lautstärke der ersten Audioeingabe als inakzeptabel betrachtet wird, wenn die Lautstärke der ersten Audioeingabe einen vordefinierten Höchstschwellenwert überschreitet.

5. Das Verfahren nach Anspruch 2, das ferner das Ausschließen (314) des einen der Teilnehmer von der Telekonferenz umfasst, wenn die Audioeingabe von der einen der Telekonferenzstationen inakzeptabel bleibt.

6. Das Verfahren nach Anspruch 5, wobei die erste Audioeingabe eine Probe darstellt, die automatisch während der Telekonferenz genommen wird.

7. Das Verfahren nach Anspruch 1, wobei die erste Audioeingabe eine Probe darstellt, die automatisch während der Telekonferenz genommen (314) wird.

8. Das Verfahren nach Anspruch 1, das ferner das Vergeben eines Beobachterstatus (312) an den einen der Teilnehmer der Telekonferenz umfasst, wenn Eingaben von der einen der Telekonferenzstationen inakzeptabel bleiben.

9. Das Verfahren nach Anspruch 1, wobei die erste Audioeingabe einen Hintergrundrauschpegel darstellt.

10. Das Verfahren nach Anspruch 1, wobei die erste Audiöeingabe eine Sprachprobe des einen der Teilnehmer beim Teilnehmen an der Telekonferenz darstellt.

11. Das Verfahren nach Anspruch 1, das ferner das Reduzieren des Hintergrundrauschens des Audiosignals umfasst.

## Revendications

1. Procédé (200) de correction de niveaux de voix de participants dans une téléconférence qui met en jeu une pluralité de stations de téléconférence (104, 106, 108, 110), comprenant :
la réception (204), dans un système de surveillance de qualité audio, d'une première entrée audio provenant de l'une desdites stations de téléconférence ;
la vérification (206) de manière électronique, par le système, du point de savoir si un volume de ladite première entrée audio est acceptable ;
si ledit volume de ladite première entrée audio est inacceptable (208), ledit système indiquant à l'un desdits participants par l'intermédiaire de ladite une desdites stations de téléconférence que ledit volume de ladite première entrée audio est inacceptable, ladite indication étant réalisée d'une manière qui est sensiblement transparente (302A) pour au moins un autre desdits participants ; et
si ledit volume de ladite première entrée audio est inacceptable, ledit système réalisant un traitement de signal sur le signal audio afin de corriger le niveau de volume.

2. Procédé selon la revendication 1, dans lequel ladite première entrée audio représente une entrée de voix par ledit participant desdits participants.

3. Procédé selon la revendication 2, dans lequel ledit volume de ladite première entrée audio est estimé inacceptable si ledit volume de ladite première entrée audio chute au-dessous d'un seuil minimal prédéfini.

4. Procédé selon la revendication 2, dans lequel ledit volume de ladite première entrée audio est estimé inacceptable si ledit volume de ladite première entrée audio est au-dessus d'un seuil maximal prédéfini.

5. Procédé selon la revendication 2, comprenant en outre l'exclusion (314) dudit participant desdits participants de ladite téléconférence si des entrées audio provenant de ladite une desdites stations de téléconférence reste inacceptable.

6. Procédé selon la revendication 5, dans lequel ladite première entrée audio représente un échantillon pris automatiquement durant ladite téléconférence.

7. Procédé selon la revendication 1, dans lequel ladite première entrée audio représente un échantillon pris automatiquement (314) durant ladite téléconférence.

8. Procédé selon la revendication 1, comprenant en outre l'attribution audit participant desdits participants de ladite téléconférence d'un statut d'observateur (312) si des entrées provenant de ladite une desdites stations de téléconférence reste inacceptable.

9. Procédé selon la revendication 1, dans lequel ladite première entrée audio représente un niveau de bruit de fond.

10. Procédé selon la revendication 1, dans lequel ladite première entrée audio représente un échantillon de voix dudit participant desdits participants lors de l'entrée dans ladite téléconférence.

11. Procédé selon la revendication 1, comprenant en outre la réduction du bruit de fond du signal audio.
